# EUROPEAN PATENT APPLICATION

(11) **EP 3 147 465 A1**
(43) Date of publication of application: **29.03.2017**
(21) Application number: 15186681.1
(22) Date of filing: 24.09.2015
(51) Int. Cl.: F01D 25/28, F02C 7/20

(54) **SUPPORT OF A MACHINE, ROTATING MACHINE ENGINE AND A METHOD FOR ASSEMBLING OF SUCH A ROTATING MACHINE**

(71) Applicant: Siemens Aktiengesellschaft, 80333 München (DE)
(72) Inventor: Widerstedt, Peter, 59048 Vikingstadt (SE)

(57) **Abstract**

The invention is related to a support (1) for a machine part (10), particularly for a rotating machine part, more particularly for a gas turbine engine part, comprising a first support component (2), an interface component (4) comprising a receiving unit (5), and a second support component (3). The second support component (3) is connectable to the machine part (10), the second support component (3) comprising a pin (21) arranged to be engageable with the receiving unit (5), wherein the pin (21) comprises at least three bearing surfaces (22). The receiving unit (5) is engageable with the first support component (2) and comprises at least three rotatable substantially cylindrical or barrel-shaped rollers (41), wherein rolling surfaces (42) of the rollers (41) are in bearing contact with the bearing surfaces (22) when the pin (21) is engaged with the receiving unit (5)

The invention is also related to a rotating machine engine with the mentioned support and a method of assembling.

## Description

### Field of the invention

The invention relates to a support - or support arrangement - for a machine, particularly for a rotating machine, which allows an easier assembly and disassembly. The invention furthermore relates to the corresponding rotating machine and a method for assembling such a machine.

### Background of the invention

Gas turbine engines and other rotating machines are fairly large and heavy components that are typically mounted on a skid. Furthermore, a gas turbine engine may be connected via a shaft to other components that have to be aligned with a gas turbine engine. These other components may be for example compressors or generators. The gas turbine engine comprises rotating parts which are surrounded by static parts, including a casing. The mounting of a gas turbine engine on a skid may be performed by having several supports connecting a skid to the casing of the gas turbine engine.

When a gas turbine is needed to be replaced or disassembled, possibly due to a failure of the machine, this has to happen in a limited amount of time. Typically this is not quickly to be achieved as the engine needs to be replaced by disassembling also the supporting structure of the engine and consequently when a new engine is set up and assembled again, the supporting structure has to be erected together with a new gas turbine engine.

It would be advantageous to be able to replace a full engine or a complete engine section of the engine without disassembly and/or assembly of the engine and its supporting structure.

### Summary of the invention

The present invention seeks to optimize the time and effort for exchanging a gas turbine engine or any other type of machine or subcomponents of these engines/machines. It is an object to the invention to mitigate existing problems and drawbacks.

This objective is achieved by the independent claims. The dependent claims describe advantageous developments and modifications of the invention.

According to the invention, a support - i.e. a support structure or a support arrangement - for a machine part, particularly for a rotating machine part, more particularly for a gas turbine engine part is provided. The machine part may be a complete machine or a part of a machine, like a casing or a part of a casing. The support comprises a first support component, an interface component and a second support component. The first support component may specifically be a part that is statically connected to a skid. The second support component may be connectable to the machine part which is supported by the support arrangement. The second support component comprises a pin arranged to be engageable with a receiving unit of the interface component, wherein the pin comprises at least three bearing surfaces. The receiving unit as said comprises a receiving unit, wherein the receiving unit itself is engageable with the first support component and comprises at least three rotatable substantially cylindrical or barrel-shaped rollers, wherein rolling surfaces of the rollers are in bearing contact with the bearing surfaces when the pin is engaged with the receiving unit or during an engaging process. The second support component may be considered movable relative to the first support component. That means that the second support component may not be fixedly connected to the supporting skid during assembly.

The second support component may be connectable to the machine part preferably by bolts and nuts. Other fixed connections may be possible. Assembling the machine part onto a skid may be performed that the machine part connected to the second support component will be moved towards the first support component and/or the interface component. By moving the second support component during assembling the pin of the second support component will be inserted into the receiving unit such that the three bearing surfaces of the pin will become in bearing contact with the rolling surfaces of the rollers. By this, the roller provides the support for the machine part via the interface of the first support component together with the interface component and the second support component.

Under rolling surfaces tubular elements of the roller are to be understood. The rollers and the pin must be dimensioned and be of material that can hold heavy loads like at least a part of the weight of a gas turbine engine or a similar engine or a machine, or at least the weight of a casing of such an engine or machine.

The mentioned configuration is specifically advantageous because it allows assembling and disassembling a machine part quickly from a skid or from a supporting structure just by sliding in and out one part to another. It has to be noted that possibly only a first section of a machine is to be dissembled from a second section. In this case the first component may be connected to the second section that remains fixedly on the skid. The second section may also have an additional support structure so that the second section will stay in position after the first section has been disconnected.

Furthermore, the configuration according to the invention allows an adaption to thermal expansion of some elements during operation of the machine just by the effect that the pin will then further slide into the receiving unit or the opposite.

Preferably exactly three rollers are provided and also the pin only has exactly three bearing surfaces. In this configuration the axes of the three rollers may be aligned to form an equiangular triangle or in other words an equilateral triangle. This allows a safe connection between the pin and the rollers. Optionally also a higher number of rollers and a corresponding number of pin surfaces can be used.

A pin may be preferably substantially in shape of triangular in cross-section in a first region of the pin. At a different cross-section position - a second region of the pin - the shape may be different as explained in the following. Preferably the pin comprises a tapered tip and further non-tapered section. In a more preferred embodiment, the cross-section of a pin section taken perpendicularly to a longitudinal expanse of the pin at a second region may be in form of a triangular with truncated corners. That means the pin has the form of a hexagon with three sides each of a first length and defining the bearing surfaces with further three sides each of a second length and wherein the three sides and the further three sides are arranged alternating. The first length may be preferably longer than the second length. For example the first length may be at least twice as long as the second length. In another embodiment the first length may be at least three times as long as the second length. The further three sides are particularly not in bearing contact with another component.

The interfaced component comprises preferably a cage to which rotating or non-rotating shafts of the rollers are connected. That means that the rollers may be attached to that cage and form a single component with the cage. The cage may comprise a first set of struts connected to another in hexagon shape and may further comprise a set of struts erected perpendicularly from a plane of the first set of struts, wherein each one of the second set of struts is fixed to the first set of struts at corners of the hexagonal support element.

The case may be a loose element not continuously fixedly connected to the first support component or the second support component. During the assembly the case may be attached temporarily attached to the first support component to simplify the assembly step. When assembled, the cage is engaged with the pin. Then the case is loosely connected to the second support component. Particularly this loose connection is loose in direction of the expanse of the pin and/or in direction of the shaft of the rotating machine, e.g. having sufficient play, for example to accommodate thermal expansion.

Attached to the rollers there may be engagement elements present that engage the engagement elements on one end to the pin and on the other end to the first support component. The engagement elements may be particularly be fixedly attached on the top surface of the cylindrical rollers. The engagement elements may be particularly be rotatable together - similar as being a single component - with a connected roller. Furthermore, engagement elements could also be present on the circumference of the roller surface, e.g. like cones extending from the roller surface. The corresponding surfaces of the pin and/or the first support component shall be formed in a mirrored way to the engagement element so that the engagement element can engage with the opposite surface. This can happen by an engagement element that has a pin-type form entering a depression in the opposite surface of the first support component or the surface of the pin. Alternatively the engagement element may form a depression itself. In this case there may be a pin-type element attached to the first support component or attached to the surface of the pin to allow again an engagement of these two opposite components.

For example the engagement element may be of a club shape, or a tongue shape or a cuboid shape with a tapering end such that the end may extend such that it can engage within the depression of an opposite surface.

The engagement element may be elongated and can have these kinds of elements at both of its end. For example the engagement element may be mirror-symmetric. In this case, the engagement element may be formed as double club shaped or double tongue shaped elements or as cuboids with tapered ends at both ends of the engagement element. In case of such a dual engagement element, a first section each of an engagement element may be engageable with a corresponding depression of the static first support component and a second section of the engagement element is engageable with a corresponding depression of the pin.

The engagement elements may be rotatably connected to the cage. The range of rotation may be limited though, for example less than 40° rotation, or particularly 30° or particularly 20° or any type of range less than 20° or an intermediate value of the mentioned ranges. The engagement element can be fixedly be connected to the roller meaning that also the rollers, even though rotatably mounted, are limited in the range of rotation to a maximum angle of 40°, 30°, 20° or any other value below 40°.

To define a maximum travel of the pin into the intermediate component, the second support component may comprise a stop surface, wherein the stop surface is positioned in relation to the pin such that, where an assembling of the machine part to the support is finalized, the stop surface may remain in axial bearing contact with a corresponding surface of the first support component, particularly in a cold or stopped engine. The stop surface may not be in contact during normal operation - hot condition - to allow a play.

As said, the stop surface may, in one embodiment, only be in bearing contact with the corresponding surface of the first support component when the machine is not in working mode of operation, so this defines only one position during assembly of the components.

The invention is also related to a rotating machine engine that is to be mounted on a mounting surface by using the previously defined support. Furthermore, the invention is also directed to a gas turbine engine that uses the defined support. Particularly the support may be used to mount a rotating machine part or the gas turbine engine part - particularly a casing - onto a skid. Protected by this invention may also be the assembled rotating machine engine or also a part of the machine as long it shows a support as explained before to connect sub components.

Furthermore, the invention is also related to a method of assembling such a rotating machine or such a gas turbine engine. A first support component may be provided particularly on a skid. This first support component may be fixed to that skid. Furthermore, an interface component may be provided and be inserted into a cut out of the first support component. The interface component will comprise, as stated before, a receiving unit which is present to receive a pin of another component. The other component is the second support component which may be attached first to the rotating machine component or the gas turbine engine. A second support component comprises a pin as defined before. During assembly a machine part - e.g. a casing - including the second support component may be moved in longitudinal direction such that the pin slides into the receiving unit of the interface component such that eventually the first support component, the interface component and the second support component may be interlocked. By moving in longitudinal direction it is meant that the direction in which the pin extends. This may preferably be a direction that is parallel to an axis of rotation of the rotating machine and/or the gas turbine engine. As a final step, the gas turbine engine or the rotating machine will be connected to the mounting surfaces and/or the skid via a second support of the engine which has not been explained in detail before. The second support may be needed to balance a large rotating machine. Even a third support structure may be required to erect the rotating machine on a mounting surface. Nevertheless only one supporting structure may be formed in a way as defined in this text. The remaining support structures may be conventional. Nevertheless, for a transition piece or another shorter element, the defined support structure may be sufficient without having a further supporting structure attachable to that component.

The invention is specifically advantageous to connect several components that are aligned along an axis. These are for example a gas turbine engine, a compressor, or both of these elements connected via an intermediate shaft. Each of the elements could have such a support structure as defined before such that the element or a component of the element can be slid away for disassembly or can be slid to the other direction to connect the elements. This may simplify assembly and disassembly and may speed up the process of replacing parts of a rotating machine.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying schematical drawings, of which:
- FIG. 1:: shows a section of a gas turbine engine, mounted via a support according to the invention;
- FIG. 2:: shows an enlarged three dimensional view on the support;
- FIG. 3:: depicts the element of FIG. 2 from an axial direction;
- FIG. 4:: shows the element of FIG. 2 in a three dimensional view with a partial cross section across a first support component;
- FIG. 5-9:: shows in a side view with a partial cross section across a first support component different positions during a disassemble procedure starting from complete engagement until complete separation;
- FIG. 10:: depicts in a side view the a second support component including its pin according to the invention;
- FIG. 11:: shows a cross-sectional view of the pin as taken at line A-A in FIG. 10;
- FIG. 12:: shows a three-dimensional view of elements of the support for explanation of the experienced forces.

The illustration in the drawing is schematical. It is noted that for similar or identical elements in different figures, the same reference signs will be used.

Some of the features and especially the advantages will be explained for an assembled gas turbine, but obviously the features can be applied also to the single components of the gas turbine but may show the advantages only once assembled and during operation. But when explained by means of a gas turbine during operation none of the details should be limited to a gas turbine while in operation. As the invention is related to stable combustion, the features can also applied to different types of machines that comprise a combustor and that can be supplied by different types of fuels.

### DETAILED DESCRIPTION OF THE INVENTION

A gas-turbine engine may serve as one example of a rotating machine. The gas turbine - short for gas-turbine engine - comprises an air inlet at one end followed by a compressor stage in which incoming air is compressed for application to one or more combustors. Hot gases created by combustion in the combustors are directed to a set of turbine blades within a turbine section, being guided in the process by a set of guide vanes, and the turbine blades and the shaft - the turbine blades being fixed to a shaft - forming the rotor are turned about an axis as a result. The rotating rotor in turn rotates blades of the compressor stage. The mentioned components may be encapsulated by a casing. The overall casing may be comprised from several sections of casings. For example there may be a separate compressor casing or a separate casing for the turbine section. The compressor casing again may be from two sub sections, a compressor inlet casing and the remaining compressor casing. These mentioned casings frequently will also be split in a top half and a bottom half.

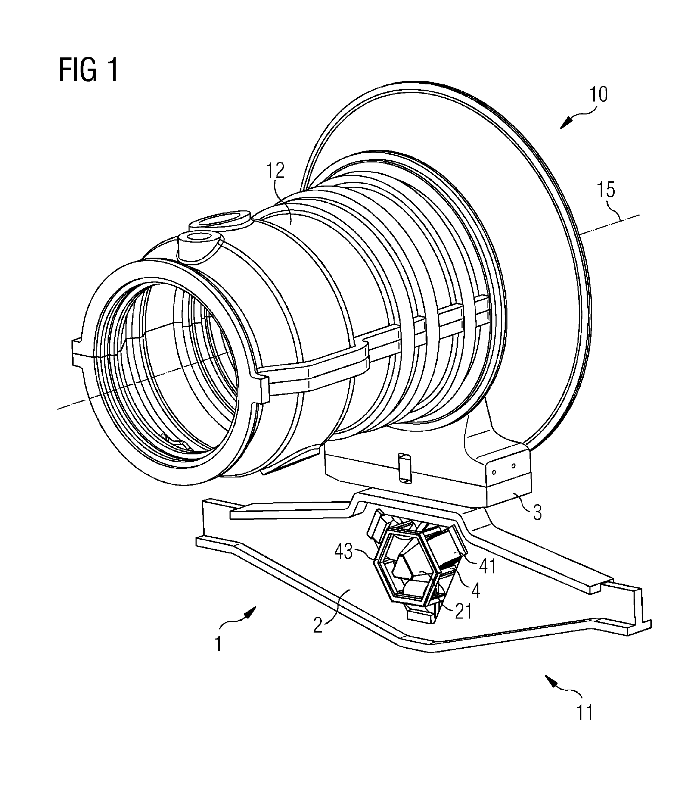

In the following it will be explained how a compressor casing can be attached or detached from the rest of the gas turbine engine. Furthermore it will be explained how that compressor casing can be mounted on a support. All this will be explained in accordance with the FIGS. 1 to 11. All of these figures show the same embodiment with a different focus, like some show different angles, some show the process of assembling or dissembling. Nevertheless the used reference numerals are applicable to all these figures as all the figures show substantially the same embodiment.

According to FIG. 1 and also the following figures a machine casing 12 - particularly a gas turbine compressor casing - is shown. The machine casing 12 is built from two parts attached to another and forms a complete tube which will surround internal machine elements like a compressor stage (not shown). The machine casing 12 rests in FIG. 1 on a support 1 - i.e. a support structure. The machine casing 12 may substantially be arranged about an axis 15, which is also the rotational axis of the machine, like the gas turbine engine.

The support 1 comprises substantially three components: a first support component 2 which is shown in the figures mainly as a metal beam, like an I-beam, a second support component 3, and an interface component 4 which is an intermediate component.

According to the figures the I-beam of the first support component 2 may widen a distance between the two flanges of the I-beam in a central region of the I-beam, the central region being the region in which the interface component 4 will be placed.

The first support component 2 may be fixedly connected to further components of the gas turbine engine or to a skid, which is not shown in the figures. Thus, the first support component 2 is static, also when the machine is disassembled or assembled. There may be alterative embodiments in which the connection of the first support component 2 and the further components is provided possibly slightly movable, e.g. for adapting to thermal expansion.

The second support component 3 is attached to the machine casing 12. In fact the machine casing 12 rests on the second support component 3. The second support component 3 is connectable to the machine casing 12 - the machine casing 12 being a machine part 10 or being a component of a machine part 10 - and comprises a pin 21.

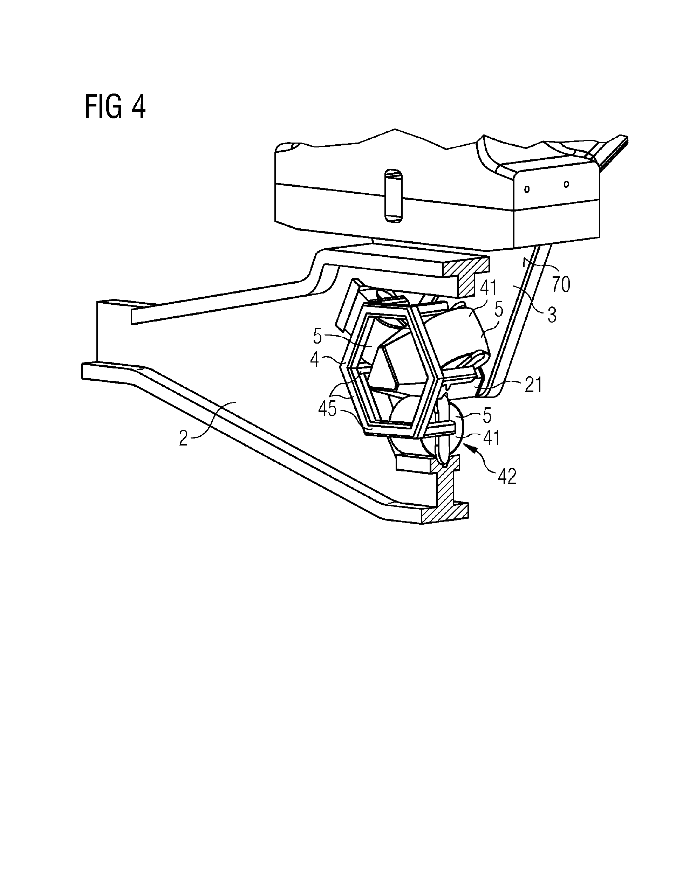

The interface component 4 comprises a receiving unit 5 (specifically highlighted in FIG. 4 but visible in all figures).

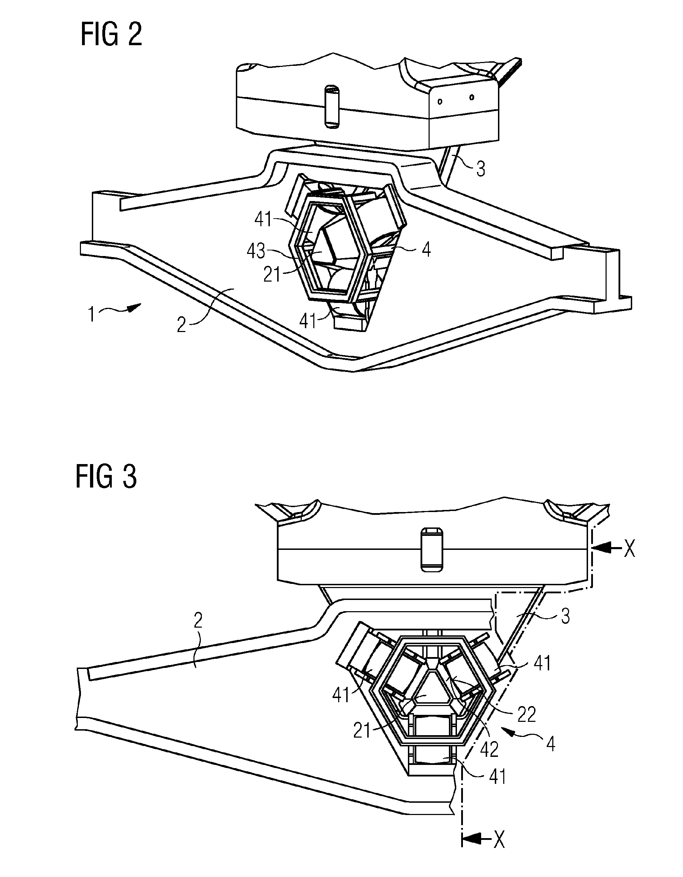

The pin 21 is arranged to be engageable with the receiving unit 5 (FIG. 1-8 and 12 show the position when engaged). The pin 21 comprises at least three bearing surfaces 22 (highlighted in FIGS. 3, 5, 9). These bearing surfaces 22 are designed to interact with the receiving unit 5. The receiving unit 5 again is engageable with the first support component 2 and comprises at least three rotatable substantially cylindrical or barrel-shaped rollers 41. Barrel-shaped means a cylindrical structure with a concavity or bulge. Rolling surfaces 42 (indicated in FIG. 3) of the rollers 41 are in bearing contact with the bearing surfaces 22 when the pin 21 is engaged with the receiving unit 5, a position as it can be seen in FIG. 1.

The rollers 41, according to the figures, are arranged such that a bottom roller will preferably oriented horizontally, while the other two upper rollers may be angled such that all three rollers 41 form an equilateral triangle. Slightly different embodiments may be possible.

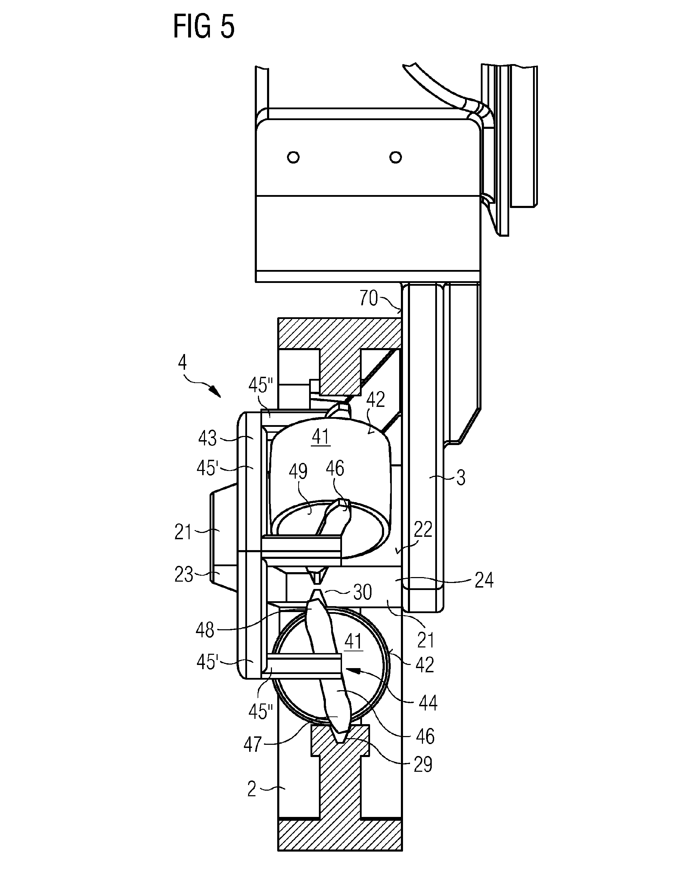

The second support component 3 including the mounted machine casing 12 are movable parts during the process of assembly/disassembly - and also during operation of the gas turbine due to thermal expansion -, movable in relation of the first support component 2. Thus, during assembly or disassembly the second support component 3 can be moved together with the connected machine casing 12 as highlighted in the FIGS. 5-9.

The interface component 4 could also be a sub-component of the first support component 2 or of the second support component 3. According to the shown embodiment the interface component 4 is a substantially loose component which will put in position when the first support component 2 and the second support component 3 are connected together. The interface component 4 prevents the rollers 41 to roll of uncontrollably when the pin 21 is not in bearing contact with the rollers 41. When there is no bearing contact, the interface component 4 may be temporarily attached to the first support component 2.

The interface component 4 according to the figures is in form of a cage 43. The cage 43 is comprised of struts 45 (see FIG. 4). Some of the struts 45 form a hexagon - first set of struts 45' as seen in FIG. 5. Further struts 45 - second set of struts 45" as seen in FIG. 5 - are attached to corners of the hexagon and are oriented perpendicular to the hexagon. The second set of struts 45" are present as a bracket or holder for the three rollers 41.

FIG. 1 shows the previously introduced components in a three dimensional view, in which the machine casing 12 is connected to the second support component 3, which again is engaged with the first support component 2. Not shown, the first support component 2 may rest on a skid or may be connected to other static components of the machine.

FIG. 2 shows an enlarged view of the engaged first support component 2 and second support component 3, which was already shown in FIG. 1. The three rollers 41 are shown more clearly. A front end of the pin 21 can be seen, whereas the view is partly blocked by the rollers 41 and the cage 43.

FIG. 3 shows the same support structure of FIGS. 1 and 2 from an axial perspective. Furthermore a right hand part of the component is removed from the figure - right of the line X-X -, and this remaining structure is used also in the following FIGS. 4-9 to explain the invention.

In FIG. 3 it can be seen that the pin 21 is formed in a cross-section substantially as a triangular with truncated edges. A tip section is tapered - tapered tip 23 (as highlighted in FIG. 5). The tapered tip 23 also is substantially a triangular with truncated edges. That means that the tapered tip 23 form a truncated hexagon-bases pyramid.

The cross section of the pin 21 taken along its expanse always forms a hexagon. So the pin 21 forms mainly a hexagonal prism. You could also call it hexagonal cylinder. In other words, the pin 21 particularly follows a form of a triangle cubuid with truncated corners.

In FIG. 3 you also see that axes of the rollers 41 are turned by 120° between another. As a consequence the rollers 41 can be in bearing contact with main surfaces of the pin 21, as seen in FIG. 3.

FIG. 4 shows the same embodiment as before from the same perspective as FIG. 2, but the right hand parts of FIG. 3 beyond the line X-X are removed from FIG.4. This allows to see the rollers 41 in more detail. It can be seen that the struts 45 also have a plurality of poles in axial direction - the second set of struts 45" -, at which the rollers 41 are rotatably mounted and/or guided. A stop surface 70 is part of the second support component 3. According to the embodiment, the stop surface 70 connects the pin 21 with the remainder of the second support structure 3. The stop surface 70 is present such that it defines the maximum possible depth of penetration of the pin 21 into the first support component 2 - i.e. into the cage 43. A part of the first support component 2 may touch the stop surface 70 when first support component 2 and the second support component 3 are fully engaged.

FIG. 5-9 show the same embodiments as shown in FIGS. 1-4 but as a sectional drawing as seen from the line X-X as indicated in FIG. 3. FIG. 5 shows the exact same position as FIG. 3, while FIGS. 5-9 show different position during the process of assembly or disassembly of the components.

In FIG. 5 subcomponents of the pin 21 are identified as tapered tip 23 and non-tapered section 24. The tapered tip 23 is present to position the pin 21 in the centre defined by the three rollers 41. The non-tapered section 24 then provides bearing surfaces for the rolling surfaces 42 of the rollers 41.

The three rollers 41, including their engagement elements 46 and connected as one component - the interface component 4 - via the cage 43, which again is comprised of the first set of structs 45' in form of a hexagon and the second set of struts 45".

The rollers 41 are each mounted between a pair of the second set of struts 45" with engagement elements 46 at each axial end of the rollers 41. Each of the rollers 41 will have a rotating shaft 44 along an axis of the rollers 41, with an axis about which the shaft 44 and the rollers 41 will rotate - i.e. the shaft 44 rotates along with the corresponding roller 41 - or alternatively a non-rotating shaft 44 along an axis of the rollers 41 around which the further components of the rollers 41 rotate. The engagement elements 46 may be fixedly connected to a top face section 49 of the rollers 41, particularly connected between a central portion of the engagement elements 46 and the rotatable top face section 49. The top face section 49 may turn in conjunction with a rolling surface of the rollers 41. The engagement elements 46 are indicated is double-club-shaped bars, having a tapered and/or round tip at both of its ends. The ends of the engagement elements 46 are highlighted as first section 47 and second section 48 of the engagement element 46.

In FIG. 5, when the first support component 2 and the second support component 3 are fully engaged in the interface component 4, the first section 47 of the engagement element 46 is inserted into an engagement element 29 of the first support component 2, which substantially is in form of a groove or depression. Furthermore, the second section 48 of the engagement element 46 is inserted into an engagement element 30 of the pin 21, which again substantially is in form of a groove.

It can be anticipated from FIG. 5 that the cage 43 is positioned between the first support component 2 and the second support component 3 by the insertion of the first section 47 and the second section 48 of the engagement element 46 into the corresponding engagement elements 29 and 30. The mechanical stability is provided by the bearing contact between the bearing surfaces 22 of the pin 21 with the rolling surfaces 42 of the rollers 41.

According to FIG. 5, the pin 21 is completely inserted into the cage 43 of the intermediate component 4. A part of the first support component 2 is in physical contact with the stop surface 70. The engagement element 46 may be oriented of about 10-15 degrees from a perpendicular orientation, perpendicular to the overall axial direction (as mentioned by reference numeral 15 in FIG. 1) of the machine part 10.

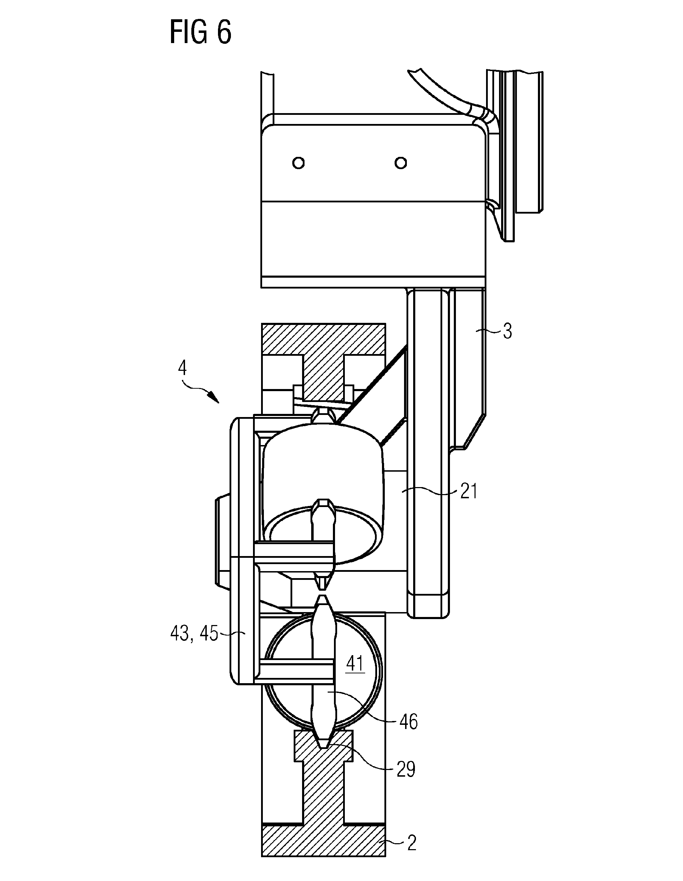

FIG. 6 shows a side view from the side and from the cut as indicated as X-X in FIG. 3. The pin 21 is slightly removed from the cage 43 of the intermediate component 4. The engagement elements 46 are oriented substantially perpendicular to the overall axial direction (as mentioned by reference numeral 15 in FIG. 1) of the machine part 10. Longitudinal ends of the engagement elements 46 penetrate into the engagement element 29 of the first support component 2 and also into the engagement element 30 of the pin 21. FIG. 6 shows the deepest penetration position.

During normal operation, with a hot engine, the positions of the components will be close this center position, as shown in FIG. 6. A cold engine may show a position between FIG. 5 and FIG. 6.

In a preferred embodiment, the end position as in FIG. 5 should never occur. Due to a rigid design, high stresses would occur. For example the invention will be designed there is a possible travel length of 80-120mm (e.g. 100mm) and a maximum thermal expansion between cold and hot will be 20-30mm (e.g. 25mm). Other values may be applicable.

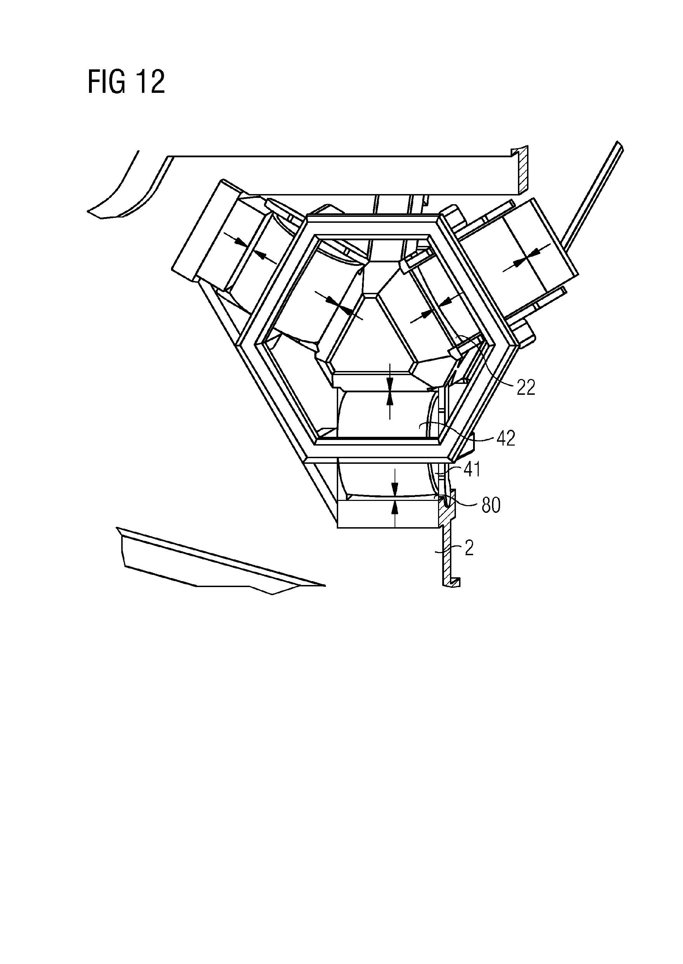

Corresponding to FIG. 6, FIG. 12 shows a full engagement of the components. The rolling surfaces 42 of the rollers 41 are in bearing contact with the bearing surfaces 22 when the pin 21 is engaged with the receiving unit 5. Additionally it is depicted in FIG. 12 that the rollers 41 are also in bearing contact with the first support component 2 via further bearing surfaces 80. The bearing contact or the forces that occur at the bearing contact is visualised by arrows at the contact regions. The forces, when assembled, go from the first support component 2 via the rollers 41 into the second support component 3 (or vice versa).

Thus, when the invention is applied there is a bearing contact between elements 42 and 22 and also a contact between 80 and 42. This is how the weight of the machine casing 12 (see FIG. 1) is distributed into the first support component 2 and later on to the skid. When the pin 21 is inserted into the receiving unit 5 (indicated in FIG. 4) there can be a rolling linear movement - without any wear from sliding. The rolling of the rollers 41 appear on the surfaces of the pin 21 - the bearing surfaces 22 - and the further bearing surfaces 80. In case of a three-roller design as shown throughout figures, in which two roller 41 are located angled to another at the top and one roller 41 is located at the bottom, the upper rollers together with the bottom one form constrains in all directions other than along a direction of the axis 15 (as indicated in FIG. 1).

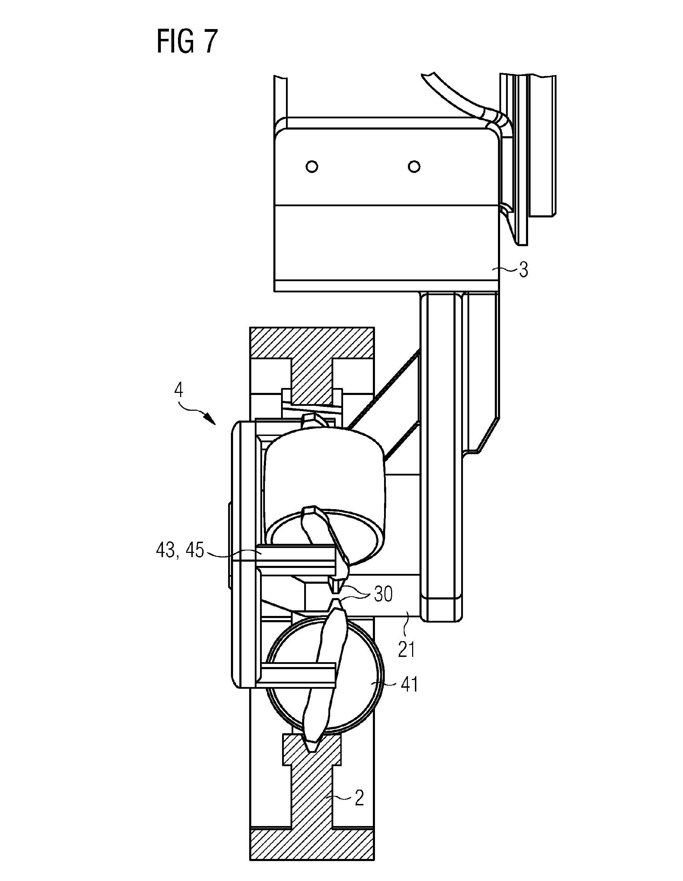

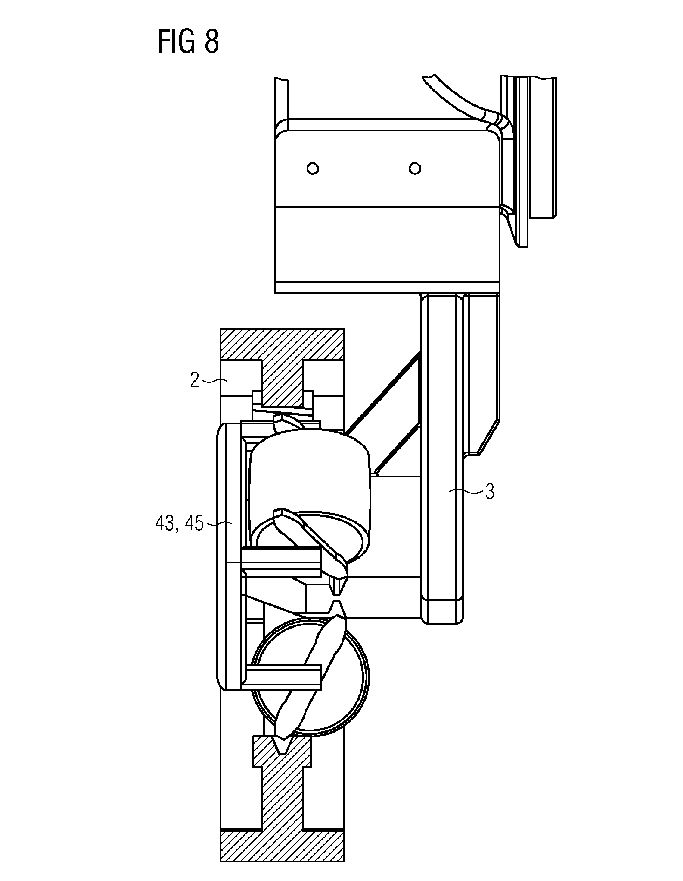

FIG. 7 and 8 now show a relative movement of the first support component 2 in respect of the second support component 3, e.g. during a further disassembling procedure. The rollers 41 will revolve, the connected engagement elements 46 will also rotate accordingly. The Longitudinal ends of the engagement elements 46 - elements 47 and 48 according to FIG. 5 - will only partly penetrate into the engagement element 29 of the first support component 2 and into the engagement element 30 of the pin 21. While FIG. 7 shows still about 50% penetration, FIG. 8 shows a position in which the engagement elements 46 was turned about 30 degrees and only has a minor penetration into the corresponding depression. In FIG. 8 the first support component 2 and the second support component 3 are substantially disengaged but still in physical contact.

Note that in Fig. 8 the cage 43 may need a temporary connected to one of the components, particularly the first support component 2 or to a skid. This may allow to keep the cage 43 in position when not properly engaged with the pin 21.

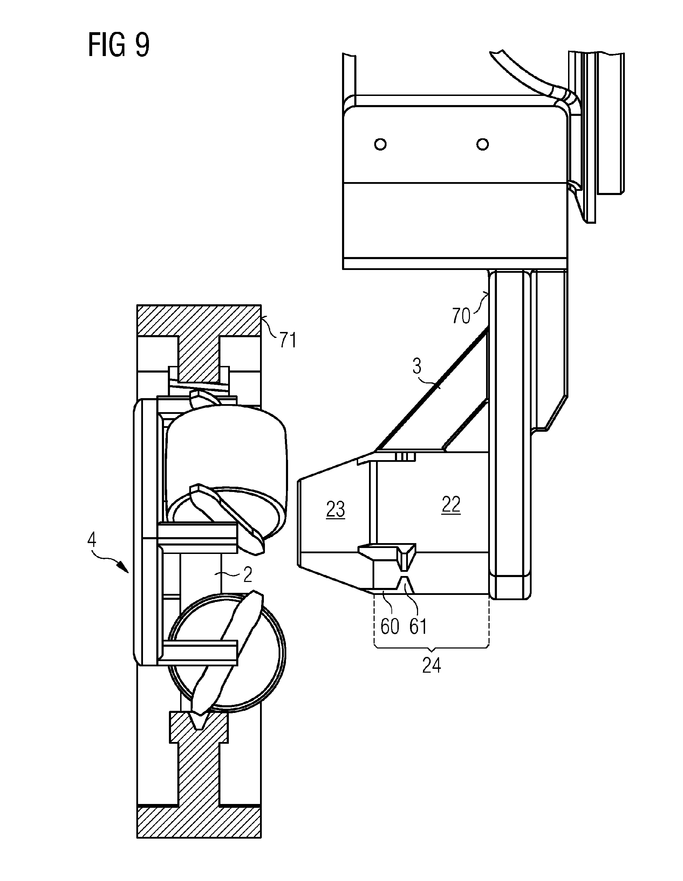

FIG. 9 shows the next phase during disassembly, i.e. a complete separation of the first support component 2 and the second support component 3. The cage 4 remains in this example engaged with the first support component 2. One more time the stop surface 70 is highlighted. Additionally a corresponding surface 71 of the first support component 2 is indicated in the figure, which is in the example a side face of the proposed I-beam configuration.

For the pin 21 the tapered tip 23 and the non-tapered section 24 finally become visible. Also the bearing surfaces 22 are indicated another time. The pin 21 is connected to other elements of the second support component 3, e.g. also by an additional diagonal beam.

The engagement element 30 of the pin 21 is shown in more detail. It comprises an elongated cut 60 and a further recess 61. The elongated cut 60 is present to guide the first/second section 47/48 of the engagement element 46. This allows to position the first support component 2 and the second support component 3 in alignment to another, particularly without radial displacement. The further recess 61 is an indention in the pin 21, which allows penetration of the first/second section 47/48 of the engagement element 46.

The rollers 41 may have synchronization features that constrain them in the right position and/or in the right orientation. The synchronization is advantageous to position the rollers 41 on the same spot every time the movable part is to be assembled and that there will be a rolling contact, no sliding. The synchronization features are preferably one piece together with the rollers 41, internal to the rollers 41. The synchronization may have a spring like behaviour so that the rollers 41 are oriented in a defined angle when disengaged but are able to rotate when force is applied.

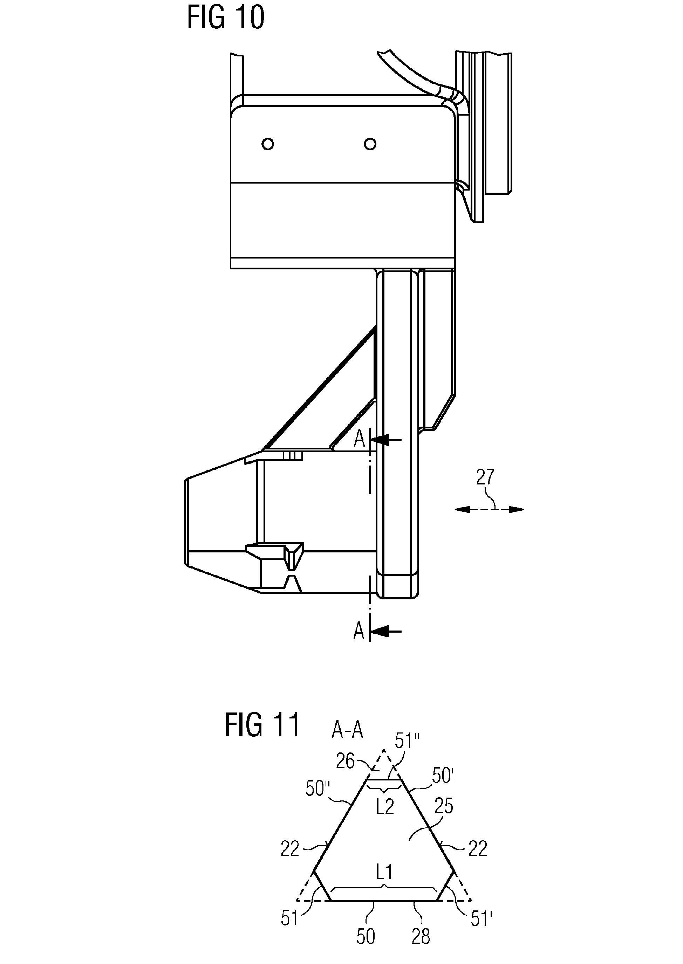

According to FIG. 10, which shows the same second support component 3 as before, a direction of a longitudinal expanse 27 of the pin 21 is indicated by a double arrow. The longitudinal expanse 27 may preferably parallel to an axial direction 15 of the machine part 10. A cut A-A is indicated taken from a perpendicular plane which is perpendicular to the longitudinal expanse 27. A view along A-A is shown now in FIG. 11.

According to FIG. 11 a cross-sectional shape of the pin 21 is shown taken perpendicular to the longitudinal expanse 27 and in the region of the non-tapered section 24. The substantial form of a triangle 26 is indicated by broken lines. The physical structure of the pin 21 is such a triangle 26 with truncated corners. This shape is indicated by reference numeral 25. It is preferably a hexagon 28 with three sides 50, 50', 50" of the same length with a length of L1 and further three sides 51, 51', 51" of the same length with a length of L2, wherein L2 is less than L1. L1 may be 3-5 times of the length of L2. The bearing surfaces 22 are the previously mentioned three sides 50, 50', 50".

It has to be noted that the invention was explained for a disassembly of the support 1. The reverse order - from FIG. 9 figure by figure to FIG. 5 - may be performed for assembly of the support 1.

The first support component 2 may be fixedly connected to a skid (the skid is not shown in the figures). Further, the machine casing 12 may be fixedly connected to the skid during operation, and the first support component 2 and the second support component 3 are arranged to another that a clearance for longitudinal adjustments between the first support component 2 and the second support component 3 is provided. The latter is substantially provided according to the figures as the pin 21 allows axial movement of the rollers 41. This would accommodate longitudinal alignment of the second support component 3, particularly to adapt to thermal expansion of the machine casing 12.

The invention is particularly advantageous as it allows easy assembly of machine components, particularly for machines oriented about an axis and the assembly from one axial end of the machine. The provided pin structure is used for positioning of the two components to another but also forms a part of the support structure.

Typically a support of a large rotating machine may have two fixed support structures, one each at the axial ends. Now one of the fixes support structures may remain (not shown in the figure). A second support structure may continue to provide a fixed connection but the position can be moved. Thus, second support component 3 may not have a connection to a skid on which an engine is mounted.

Note that the machine casing 12 will also be assembled to other machine casing parts (not shown), which then will provide sufficient stiffness and stability for the substantially free hanging machine casing 12.

Please note that during assembly/disassembly the weight of the remaining machine and/or the weight of the machine casing 12 will be carried by another machinery - e.g. a roll out feature, crane or something similar.

To summarise, the proposed design of the movable part of the machine support enables disengaging and/or engaging instead of disassembly into several parts and/or a assembly from several parts. As explained, the machine support consists of a static and a movable part. The movable part is guided by three rollers that constrain a linear movement.

The invention is particularly advantageous for replacing of a machine or parts of a machine, as it will take less time. For example a casing can easily be removed to allow access to the internals of the machine. Furthermore it is advantageous that the supporting structure is movable so that it can accommodate thermal expansion.

The shown embodiment show a constrain to a linear movement, which is specifically advantageous for rotary equipment which have most of their components arranged along an axis of rotation. For example a substantially cylindrical casing around the rotor can easily be removed in a single piece without dismantling it in halfs if this linear movement is performed in axial direction, as explained in the embodiments. Furthermore, the linear movement benefits the design of the shaft/coupling to the driven equipment.

## Claims

1. Support (1) for a machine part (10), particularly for a rotating machine part, more particularly for a gas turbine engine part, comprising
- a first support component (2),
- an interface component (4) comprising a receiving unit (5), and
- a second support component (3), the second support component (3) being connectable to the machine part (10), the second support component (3) comprising a pin (21) arranged to be engageable with the receiving unit (5), wherein the pin (21) comprises at least three bearing surfaces (22),
wherein the receiving unit (5) is engageable with the first support component (2) and comprises at least three rotatable substantially cylindrical or barrel-shaped rollers (41), wherein rolling surfaces (42) of the rollers (41) are in bearing contact with the bearing surfaces (22) when the pin (21) is engaged with the receiving unit (5).

2. Support (1) for a machine part (10), according to claim 1,
**characterised in that**
the pin (21) comprising a tapered tip (23) and non-tapered section (24).

3. Support (1) for a machine part (10), according to at least one of the claims 1 or 2,
**characterised in that**
the pin (21) has a longitudinal expanse (27) and comprises a pin section along the longitudinal expanse (27) that has a substantially triangular cross section taken perpendicularly to the longitudinal expanse (27), particularly in form of a triangle cubuid with truncated corners (25).

4. Support (1) for a machine part (10), according to at least one of the claims 1 or 2,
**characterised in that**
the pin (21) has a longitudinal expanse (27) and comprises a pin section along the longitudinal expanse (27) that has a cross section taken perpendicularly to the longitudinal expanse (27) in form of a hexagon (28) with three sides (50, 50', 50") defining the bearing surfaces (22) and with further three sides (51, 51', 51"), and wherein the three sides (50, 50', 50") and the further three sides (51, 51', 51") are arranged alternating.

5. Support (1) for a machine part (10), according to at least one of the preceding claims,
**characterised in that**
the interface component (4) comprises a cage (43) to which shafts (44) of the rollers (41) are engaged.

6. Support (1) for a machine part (10), according to claim 5,
**characterised in that**
the cage (43) comprises a first set of struts (45') connected to another in hexagon shape and further comprises a second set of struts (45") erected perpendicularly from a plane of the first set of struts (45'), wherein each one of the second set of struts (45") is fixed to the first set of struts (45') at corners of the hexagon.

7. Support (1) for a machine part (10), according to at least one of the claims 5 or 6,
**characterised in that**
the interface component (4) comprises a plurality of engagement elements (46) which each are rotatably attached to the cage (43), wherein a first section (47) each of the engagement elements (46) is engageable with a corresponding engagement element (29) of the first support component (2) and/or a second section (48) of each of the engagement elements (46) is engageable with a corresponding engagement element (30) of the pin (21).

8. Support (1) for a machine part (10), according to claim 7,
**characterised in that**
at least one of the engagement elements (46) are fixed via a central portion of the engagement elements (46) to a rotatable top face section (49) of one of the cylindrical rollers (41).

9. Support (1) for a machine part (10), according to at least one of the claims 7 or 8,
**characterised in that**
at least one of the engagement elements (46) is
- club-shaped at one of its ends (47, 48) or double-club-shaped or
- tongued-shaped at one of its ends (47, 48) or double-tongued-shaped or
- shaped as elongated cuboid with tapering at one or both of its ends (47, 48).

10. Support (1) for a machine part (10), according to at least one of the claims 7 to 9,
**characterised in that**
at least one of the engagement elements (46) is limited in rotation in a range of substantially 40° or less, particularly 30° or less, even more particularly 20° or less.

11. Support (1) for a machine part (10), according to at least one of the claims 7 to 10,
**characterised in that**
the depression of the pin (21) for engaging one of the engagement elements (46) is an elongated cut for guiding one end of one of the engagement elements (46) during assembling of the machine part (10) to the support (1), wherein the elongated cut (60) comprises a further recess (61) for projecting the one end of one of the engagement elements (46) to finalise the assembling of the machine part (10) to the support (1).

12. A rotating machine engine (10), particularly a gas turbine engine,
**characterised in that**
a support (1) is arranged according to one of the claims 1 to 12 to mount a machine casing (12) of the rotating machine engine (10) which is attached to the second support component (3) as defined in one of the claims 1 to 12 to a skid which is attached to the first support component (2) as defined in one of the claims 1 to 11.

13. A rotating machine engine (10) according to claim 12,
**characterised in that**
- the first support component (2) is adjustably connected to the skid allowing longitudinal adjustments between the first support component (2) and the skid
and/or
- the first support component (2) is fixedly connected to the skid, the machine casing (12) is fixedly connected to the skid, and the first support component (2) and the second support component (3) are arranged to another that a clearance for longitudinal adjustments between the first support component (2) and the second support component (3) is provided.

14. Method for assembling of a rotating machine component (11), particularly a gas turbine engine, comprising the steps of:
- providing a first support component (2) as defined according to one of the claims 1 to 12;
- providing an interface component (4) comprising a receiving unit (5) and as defined according to one of the claims 1 to 12;
- engaging the receiving unit (5) of the interface component (4) with the first support component (2);
- attaching a second support component (3) to a machine casing (12), the second support component (3) comprising a pin (21) and as defined according to one of the claims 1 to 12;
- moving the machine casing (12) including the second support component (3) in longitudinal direction, the longitudinal direction being defined by an expanse (27) of the pin (21), such that the pin (21) engages with the receiving unit (5).
